# EUROPEAN PATENT SPECIFICATION

(11) **EP 2 588 656 B1**
(45) Date of publication and mention of the grant of the patent: **09.01.2019**
(21) Application number: 11715271.0
(22) Date of filing: 02.03.2011
(51) Int. Cl.: D01F 6/90, D01F 6/96, C08L 71/12, C08L 77/06

(54) **POLYAMIDE-POLY(ARYLENE ETHER) FIBER AND METHOD FOR ITS PREPARATION**
POLYAMID-POLY(ARYLENETHER)-FASER UND VERFAHREN ZU IHRER HERSTELLUNG
FIBRE DE POLYAMIDE-POLY(OXYDE D'ARYLÈNE) ET PROCÉDÉ POUR SA PRÉPARATION

(30) Priority: 01.03.2011 US 201113037429; 29.06.2010 US 359497 P
(43) Date of publication of application: 08.05.2013
(73) Proprietor: SABIC Global Technologies B.V., 4612 PX Bergen op Zoom (NL)
(72) Inventor: BASTIAENS, Jos, B-2040 Berendrecht (BE); HAGENAARS, Arno, NL-4617MB Bergen op Zoom (NL)
(74) Representative: Lang, Johannes
(86) International application number: PCT/IB2011/050892
(87) International publication number: WO 2012/001537

(56) References cited:
- EP-A2- 0 344 590
- DE-A1- 4 129 499
- US-A- 5 334 444
- US-A- 5 559 194
- US-A1- 2009 318 635

## Description

### BACKGROUND OF THE INVENTION

Nylon fibers are widely used in such diverse applications as carpets, ropes, parachutes, and tires. However, for some applications, including electrical insulation and fabric for protective clothing, there is a desire for nylon fibers exhibiting increased heat resistance, increased flame resistance, reduced moisture absorption, or some combination of these properties.

U.S. Patent No. 5,559,194 to Kotek et al. describes modified nylon fibers containing (a) about 40 to about 99.85% by weight of a polyamide (i.e., a nylon), (b) about 0.05 to about 10% by weight of a miscible amorphous polymer, and (c) about 0.1 to about 35% by weight of an immiscible amorphous polymer. The component (b) miscible amorphous polymer is a "copolyamide", such as a copolymer of hexamethylenediamine, isophthalic acid, and terephthalic acid. The component (b) immiscible amorphous polymer is preferably a "poly(phenylene oxide)".

There remains a need for nylon fibers exhibiting increased heat resistance, increased flame resistance, reduced moisture absorption, or some combination of these properties.

### BRIEF DESCRIPTION OF THE INVENTION

One embodiment is a fiber comprising a composition comprising: 50 to 75 weight percent of polyamide consisting of at least one member selected from the group consisting of polyamide-6,6 and polyamide-9T; and 25 to 50 weight percent of a poly(arylene ether); wherein all weight percents are based on the total weight of the composition; and wherein the composition excludes any polymer other than the polyamide and the poly(arylene ether).

The fiber may comprise a composition comprising: 50 to 62 weight percent of the polyamide; and 38 to 50 weight percent of the poly(arylene ether); wherein all weight percents are based on the total weight of the composition.

Another embodiment is a method of forming a fiber, comprising: melt extruding a composition comprising 50 to 75 weight percent of polyamide consisting of at least one member selected from the group consisting of polyamide-6,6 and polyamide-9T, and 25 to 50 weight percent of a poly(arylene ether); wherein all weight percents are based on the total weight of the composition; and wherein the composition excludes any polymer other than the polyamide and the poly(arylene ether).

The method of forming a fiber may comprise: melt extruding a composition comprising 50 to 62 weight percent of the polyamide, and 38 to 50 weight percent of the poly(arylene ether); wherein all weight percents are based on the total weight of the composition.

These and other embodiments are described in detail below.

### BRIEF DESCRIPTION OF THE FIGURES

FIG. 1 is a schematic illustration of a fiber-spinning device.
FIG. 2 is a scanning electron micrograph of a middle section of a fiber prepared according to Trial 3.1.
FIG. 3 is a scanning electron micrograph of an end section of a cut fiber prepared according to Trial 3.1.
FIGS. 4-7 are scanning electron micrographs at varying magnifications of a middle section of a fiber prepared according to Trial 3.1, then etched in toluene to selectively dissolve exposed poly(arylene ether).

### DETAILED DESCRIPTION OF THE INVENTION

The present inventors have discovered a surprising non-linear dependence of fiber-forming ability on poly(arylene ether) content in polyamide-poly(arylene ether) compositions. Compositions with no poly(arylene ether) or high poly(arylene ether) content were useful for fiber forming, whereas compositions with a low poly(arylene ether) content exhibited poor fiber forming. This result was unexpected based both on the non-linearity of the poly(arylene ether) concentration effect and based on the teaching of U.S. Patent No. 5,559,194 to Kotek et al. to use relatively low poly(arylene ether) content. The present inventors have also determined that Kotek's "miscible amorphous polymer" (which is a polyamide derived from an aromatic diacid monomer) can be omitted, thereby simplifying the process.

One embodiment is a fiber comprising a composition comprising: 50 to 75 weight percent of polyamide consisting of at least one member selected from the group consisting of polyamide-6,6 and polyamide-9T; and 25 to 50 weight percent of a poly(arylene ether); wherein all weight percents are based on the total weight of the composition; and wherein the composition excludes any polymer other than the polyamide and the poly(arylene ether). In this embodiment, polyamides other than polyamide-6,6 and polyamide-9T are excluded.

The fiber may comprise a composition comprising: 50 to 62 weight percent of the polyamide; and 38 to 50 weight percent of the poly(arylene ether); wherein all weight percents are based on the total weight of the composition.

The composition comprises a polyamide. Polyamides, also known as nylons, are characterized by the presence of a plurality of amide (-C(O)NH-) groups, and are described in U.S. Patent No. 4,970,272 to Gallucci. Suitable polyamide resins include polyamide-6, polyamide-6,6, polyamide-4, polyamide-4,6, polyamide-12, polyamide-6,10, polyamide 6,9, polyamide-6,12, amorphous polyamide resins, polyamide-6/6T and polyamide-6,6/6T with triamine contents below 0.5 weight percent, polyamide-9T, and combinations thereof. In some embodiments, the polyamide resin comprises polyamide-6, polyamide-9T, or a mixture thereof. In some embodiments, the polyamide resin comprises polyamide-6,6. In some embodiments, the polyamide resin or combination of polyamide resins has a melting point (Tₘ) greater than or equal to 171°C. In some embodiments, the polyamide excludes so-called super tough polyamide, that is, a rubber-toughened polyamide.

Polyamides may be obtained by a number of well known processes such as those described in U.S. Patent Nos. 2,071,250, 2,071,251, 2,130,523, and 2,130,948 to Carothers; 2,241,322 and 2,312,966 to Hanford; and 2,512,606 to Bolton et al. Polyamide resins are commercially available from a variety of sources.

Polyamides having an intrinsic viscosity of up to 400 milliliters per gram (mL/g) can be used, or, more specifically, having a viscosity of 90 to 350 mL/g, or, even more specifically, having a viscosity of 110 to 240 mL/g, as measured in a 0.5 weight percent solution in 96 weight percent sulfuric acid in accordance with ISO 307. In some embodiments, the polyamide has a relative viscosity of up to 6, or, more specifically, a relative viscosity of 1.89 to 5.43, or, even more specifically, a relative viscosity of 2.16 to 3.93. Relative viscosity is determined according to DIN 53727 in a 1 weight percent solution in 96 weight percent sulfuric acid.

In some embodiments, the polyamide resin comprises a polyamide having an amine end group concentration greater than or equal to 35 microequivalents amine end group per gram of polyamide (µeq/g) as determined by titration with hydrochloric acid. The amine end group concentration may be greater than or equal to 40 µeq/g, or, more specifically, greater than or equal to 45 µeq/g. Amine end group content may be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample.

The composition comprises 50 to 75 weight percent of polyamide consisting of at least one member selected from the group consisting of polyamide-6,6 and polyamide-9T. Within the range of 50 to 75 weight percent, the polyamide amount can be about 55 to about 65 weight percent.

In some embodiments, the composition comprises 50 to 62 weight percent of polyamide. Within this range, the polyamide amount can be about 55 to about 61 weight percent, specifically about 55 to about 60 weight percent.

The composition comprises a poly(arylene ether). The poly(arylene ether) comprises repeating structural units of the formula 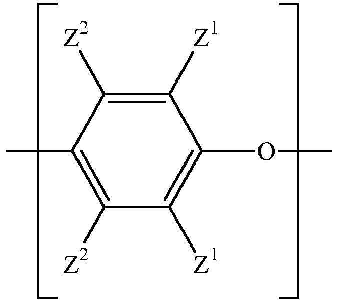 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as "substituted", it can contain heteroatoms over and above the carbon and hydrogen members of the substituent residue. Thus, when specifically described as substituted, the hydrocarbyl residue can also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it can contain heteroatoms within the backbone of the hydrocarbyl residue.

The poly(arylene ether) can comprise molecules having aminoalkyl-containing end group(s), typically located in an ortho position to the terminal hydroxy group. Also frequently present are tetramethyldiphenoquinone (TMDQ) end groups, typically obtained from reaction mixtures in which tetramethyldiphenoquinone by-product is present.

The poly(arylene ether) can be in the form of a homopolymer; a copolymer; a graft copolymer; an ionomer; or a block copolymer; as well as combinations comprising at least one of the foregoing. Poly(arylene ether) includes polyphenylene ether comprising 2,6-dimethyl-1,4-phenylene ether units optionally in combination with 2,3,6-trimethyl-1,4-phenylene ether units. In some embodiments, the poly(arylene ether) consists of poly(2,6-dimethyl-1,4-phenylene ether). In this context, the term "consists of' excludes the reaction products of poly(arylene ether)s and functionalizing agents, such as acid-functionalized poly(arylene ether)s and anhydride-functionalized poly(arylene ether)s.

In some embodiments, the poly(arylene ether) comprises a poly(arylene ether)-polysiloxane block copolymer. As used herein, the term "poly(arylene ether)-polysiloxane block copolymer" refers to a block copolymer comprising at least one poly(arylene ether) block and at least one polysiloxane block.

In some embodiments, the poly(arylene ether)-polysiloxane block copolymer is prepared by an oxidative copolymerization method. In this method, the poly(arylene ether)-polysiloxane block copolymer is the product of a process comprising oxidatively copolymerizing a monomer mixture comprising a monohydric phenol and a hydroxyaryl-terminated polysiloxane. This synthetic approach is most conducive to preparing block copolymers with relatively low polysiloxane contents. Thus, in some embodiments, the monomer mixture comprises about 90 to about 99 parts by weight of the monohydric phenol and about 1 to about 10 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 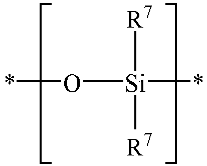 wherein each occurrence of R⁷ is independently hydrogen, C₁-C₁₂ hydrocarbyl or C₁-C₁₂ halohydrocarbyl; and two terminal units having the structure 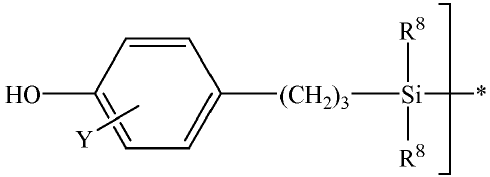 wherein Y is hydrogen, C₁-C₁₂ hydrocarbyl, C₁-C₁₂ hydrocarbyloxy, or halogen, and wherein each occurrence of R⁸ is independently hydrogen, C₁-C₁₂ hydrocarbyl or C₁-C₁₂ halohydrocarbyl.

In some embodiments, the monohydric phenol comprises 2,6-dimethylphenol, and the hydroxyaryl-terminated polysiloxane has the structure 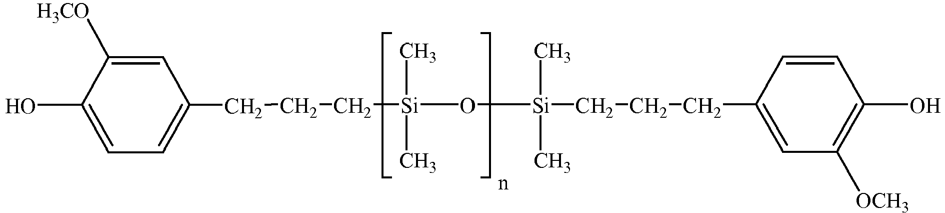 wherein n is, on average, about 5 to about 100.

The oxidative polymerization of a mixture of monohydric phenol and a hydroxyaryl-terminated polysiloxane produces poly(arylene ether)-polysiloxane block copolymer as the desired product and poly(arylene ether) (without an incorporated polysiloxane block) as a by-product. It is not necessary to separate the poly(arylene ether) from the poly(arylene ether)-polysiloxane block copolymer. The poly(arylene ether)-polysiloxane block copolymer can thus be incorporated into the present composition as a "reaction product" that includes both the poly(arylene ether) and the poly(arylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(arylene ether)-polysiloxane block copolymer.

In some embodiments, the poly(arylene ether)-polysiloxane block copolymer is provided in the form of a poly(arylene ether)-polysiloxane block copolymer reaction product comprising a poly(arylene ether) and a poly(arylene ether)-polysiloxane block copolymer. The poly(arylene ether)-polysiloxane block copolymer can comprise a poly(arylene ether) block, and a polysiloxane block comprising, on average, about 35 to about 80 siloxane repeating units. The poly(arylene ether)-polysiloxane block copolymer reaction product can comprise about 1 to about 8 weight percent siloxane repeating units and 92 to 99 weight percent arylene ether repeating units. The poly(arylene ether)-polysiloxane block copolymer reaction product can have a weight average molecular weight of at least 30,000 atomic mass units.

When the poly(arylene ether)-polysiloxane block copolymer is provided in the form of a poly(arylene ether)-polysiloxane block copolymer reaction product, that reaction product includes comprises a poly(arylene ether). The poly(arylene ether) is the product of polymerizing the monohydric phenol alone and is a by-product of the block copolymer synthesis. When the monohydric phenol consists of a single compound (for example, 2,6-dimethylphenol), the poly(arylene ether) is the product of homopolymerizing that single monohydric phenol. When the monohydric phenol comprises two or more distinct monohydric phenol species (for example, a mixture of 2,6-dimethylphenol and 2,3,6-trimethylphenol), the poly(arylene ether) is the product of copolymerizing the two or more distinct monohydric phenol species. Using the nuclear magnetic resonance methods described in the working examples, it has not been possible to allocate the arylene ether residues between poly(arylene ether) and poly(arylene ether)-polysiloxane block copolymer. However, the presence of poly(arylene ether) is inferred from the detection and quantification of "tail" groups as defined below (e.g., 2,6-dimethylphenoxy groups when the monohydric phenol is 2,6-dimethylphenol) and/or the presence of "biphenyl" groups as defined below (e.g., the residue of 3,3',5,5'-tetramethyl-4,4'-biphenol) in the isolated product.

When the poly(arylene ether)-polysiloxane block copolymer is provided in the form of a poly(arylene ether)-polysiloxane block copolymer reaction product, it comprises a poly(arylene ether)-polysiloxane block copolymer. The poly(arylene ether)-polysiloxane block copolymer comprises a poly(arylene ether) block and a polysiloxane block. The poly(arylene ether) block is a residue of the polymerization of the monohydric phenol. In some embodiments, the poly(arylene ether) block comprises arylene ether repeating units having the structure 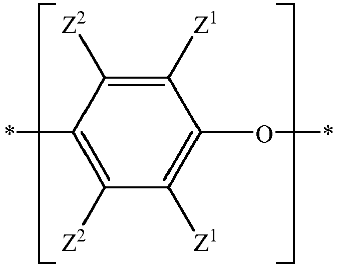 wherein for each repeating unit, each Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atom. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it may, optionally, contain heteroatoms over and above the carbon and hydrogen members of the substituent residue. Thus, when specifically described as substituted, the hydrocarbyl residue may also comprise one or more substituents such as halogen (including fluorine, chlorine, bromine, and iodine), carboxylic acid groups, amino groups, hydroxyl groups, or the like, or it may contain divalent heteroatoms-containing groups such as oxygen atoms, silicon atoms, and carbonyl groups within the backbone of the hydrocarbyl residue. In some embodiments, the poly(arylene ether) block comprises 2,6-dimethyl-1,4-phenylene ether repeating units, that is, repeating units having the structure 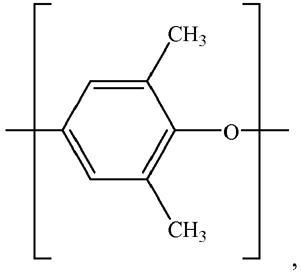 or 2,3,6-trimethyl-1,4-phenylene ether repeating units, or a combination thereof.

The polysiloxane block is a residue of the hydroxyaryl-terminated polysiloxane. In some embodiments, the polysiloxane block comprises repeating units having the structure 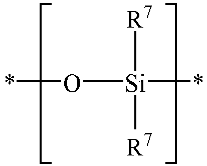 wherein each occurrence of R⁷ is independently hydrogen, C₁-C₁₂ hydrocarbyl or C₁-C₁₂ halohydrocarbyl; and the polysiloxane block further comprises a terminal unit having the structure 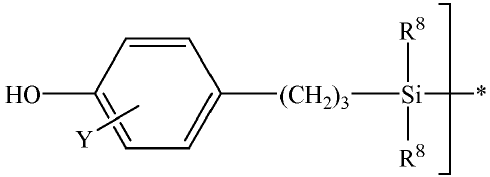 wherein Y is hydrogen, C₁-C₁₂ hydrocarbyl, C₁-C₁₂ hydrocarbyloxy, or halogen, and wherein each occurrence of R⁸ is independently hydrogen, C₁-C₁₂ hydrocarbyl or C₁-C₁₂ halohydrocarbyl. In some embodiments, each occurrence of R⁸ is independently C₁-C₆ alkyl, specifically C₁-C₃ alkyl, more specifically methyl. In some embodiments, the polysiloxane repeating units comprise dimethylsiloxane (-Si(CH₃)₂O-) units. In some embodiments, the polysiloxane block has the structure 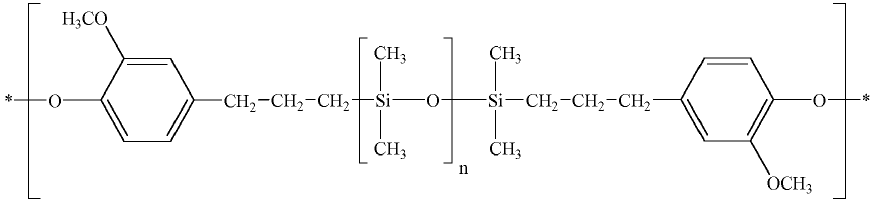 wherein n is 35 to 60.

In some embodiments, the poly(arylene ether) block comprises arylene ether repeating units having the structure 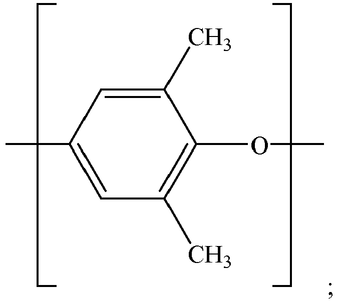 and the polysiloxane block has the structure 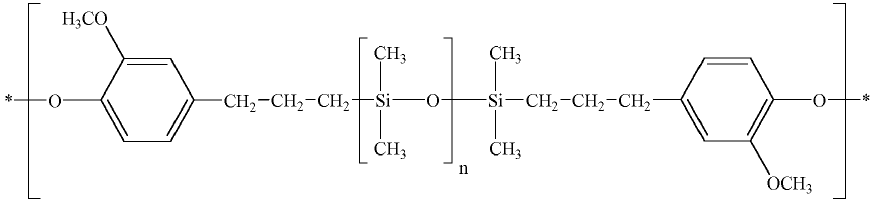 wherein n is 35 to 60; and the poly(arylene ether)-polysiloxane block copolymer reaction product has a number average molecular weight of 10,000 to 30,000 atomic mass units.

The hydroxyaryl-terminated polysiloxane comprises at least one hydroxyaryl terminal group. In some embodiments, the hydroxyaryl-terminated polysiloxane has a single hydroxyaryl terminal group, in which case a poly(arylene ether)-polysiloxane diblock copolymer is formed. In other embodiments, the hydroxyaryl-terminated polysiloxane has two hydroxyaryl terminal groups, in which case in which case poly(arylene ether)-polysiloxane diblock and/or triblock copolymers are formed. It is also possible for the hydroxyaryl-terminated polysiloxane to have a branched structure that allows three or more hydroxyaryl terminal groups and the formation of corresponding branched copolymers.

As noted above, the polysiloxane block can comprise, on average, about 35 to about 80 siloxane repeating units. Within this range, the number of siloxane repeating units can be about 35 to about 60, more specifically about 40 to about 50. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminate polysiloxane molecule can be determined by NMR methods that compare the intensity of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance (¹H NMR) method in which integrals for the protons of the dimethylsiloxane resonance and the protons of the eugenol methoxy group are compared.

When prepared by the oxidative copolymerization method, the poly(arylene ether)-polysiloxane block copolymer reaction product can comprise about 1 to about 8 weight percent siloxane repeating units and 92 to 99 weight percent arylene ether repeating units, based on the total weight of the poly(arylene ether)-polysiloxane block copolymer reaction product. Within these ranges, the weight percent of siloxane repeating units can be about 3 to about 7 weight percent, specifically about 4 to about 6 weight percent, more specifically about 4 to about 5 weight percent; and the weight percent arylene ether repeating units can be about 93 to about 97 weight percent, specifically about 94 to about 96 weight percent, more specifically about 95 to about 96 weight percent.

When prepared by the oxidative copolymerization method, the poly(arylene ether)-polysiloxane block copolymer reaction product can have a weight average molecular weight of at least about 30,000 atomic mass units. In some embodiments the weight average molecular weight is about 30,000 to about 150,000 atomic mass units, specifically about 35,000 to about 120,000 atomic mass units, more specifically about 40,000 to about 90,000 atomic mass units, even more specifically about 45,000 to about 70,000 atomic mass units. In some embodiments, the poly(arylene ether)-polysiloxane block copolymer reaction product has a number average molecular weight of about 10,000 to about 50,000 atomic mass units, specifically about 10,000 to about 30,000 atomic mass units, more specifically about 14,000 to about 24,000 atomic mass units. A detailed chromatographic method for determining molecular weight is described in the working examples below.

When prepared by the oxidative copolymerization method, the poly(arylene ether)-polysiloxane block copolymer reaction product can include relatively small amounts of very low molecular weight species. Thus, in some embodiments, the poly(arylene ether)-polysiloxane block copolymer reaction product comprises less than 25 weight percent of molecules having a molecular weight less than 10,000 atomic mass units, specifically 5 to 25 weight percent of molecules having a molecular weight less than 10,000 atomic mass units, more specifically 7 to 21 weight percent of molecules having a molecular weight less than 10,000 atomic mass units. In some embodiments, the molecules having a molecular weight less than 10,000 atomic mass units comprise, on average, 5 to 10 weight percent siloxane repeating units, specifically 6 to 9 weight percent siloxane repeating units.

Similarly, the poly(arylene ether)-polysiloxane block copolymer reaction product can also include relatively small amounts of very high molecular weight species. Thus, in some embodiments, the poly(arylene ether)-polysiloxane block copolymer reaction product comprises less than 25 weight percent of molecules having a molecular weight greater than 100,000 atomic mass units, specifically 5 to 25 weight percent of molecules having a molecular weight greater than 100,000 atomic mass units, more specifically 7 to 23 weight percent of molecules having a molecular weight greater than 100,000 atomic mass units. In some embodiments, the molecules having a molecular weight greater than 100,000 atomic mass units comprise, on average, 3 to 6 weight percent siloxane repeating units, specifically 4 to 5 weight percent siloxane repeating units.

In some embodiments, the poly(arylene ether)-polysiloxane block copolymer reaction product has an intrinsic viscosity of at least about 0.3 deciliter per gram, as measured at 25°C in chloroform. The intrinsic viscosity can be about 0.3 to about 0.6 deciliter pre gram, specifically about 0.3 to about 0.5 deciliter per gram, still more specifically about 0.31 to about 0.55 deciliter per gram, yet more specifically about 0.35 to about 0.47 deciliter per gram.

One indication of the efficiency with which the oxidative copolymerization method incorporates the hydroxyaryl-terminated polysiloxane into the block copolymer is the low concentration of so-called poly(arylene ether) "tail" groups. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(arylene ether) tail group has the structure 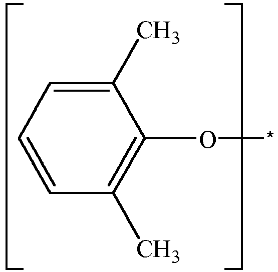 wherein the 3-, 4-, and 5- positions of the ring are substituted with hydrogen atoms (that is, the term 2,6-dimethylphenoxy does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of arylene ether "tail" groups. When the monohydric phenol consists of 2,6-dimethylphenol, and particularly when the poly(arylene ether)-polysiloxane block copolymer reaction product is the sole source of arylene ether units in the composition, the composition can comprise less than or equal to 0.4 weight percent, specifically 0.2 to 0.4 weight percent, of 2,6-dimethylphenoxy groups, based on the weight of the composition. When the monohydric phenol consists of 2,6-dimethylphenol, and particularly when the composition comprises poly(arylene ether) in addition to that present in the poly(arylene ether)-polysiloxane block copolymer reaction product, the composition can comprise less than or equal to 1 weight percent, specifically 0.2 to 1 weight percent, of 2,6-dimethylphenoxy groups, based on the weight of the composition.

The poly(arylene ether)-polysiloxane block copolymer reaction product can further include groups derived from a diphenoquinone, which is itself an oxidation product of the monohydric phenol. For example, when the monohydric phenol is 2,6-dimethylphenol, the poly(arylene ether)-polysiloxane block copolymer reaction product can comprise 1.1 to 2.0 weight percent of 2,6-dimethyl-4-(3,5-dimethyl-4-hydroxyphenyl)phenoxy groups.

The poly(arylene ether)-polysiloxane block copolymer reaction product can be isolated from solution by an isolation procedure that minimizes volatile and nonvolatile contaminants. For example, in some embodiments, the poly(arylene ether)-polysiloxane block copolymer reaction product comprises less than or equal to 1 weight percent of total volatiles, specifically 0.2 to 1 weight percent of total volatiles, determined according to the procedure in the working examples below. In some embodiments, the monomer mixture is oxidatively copolymerized in the presence of a catalyst comprising a metal (such as copper or manganese), and the poly(arylene ether)-polysiloxane block copolymer reaction product comprises less than or equal to 100 parts per million by weight of the metal, specifically 0.5 to 100 parts per million by weight of the metal, more specifically 10 to 50 parts per million by weight of the metal, even more specifically 20 to 50 parts per million by weight of the metal.

The poly(arylene ether)-polysiloxane block copolymer reaction product can be prepared by a method comprising oxidatively copolymerizing the monohydric phenol and the hydroxyaryl-terminated polysiloxane to form a poly(arylene ether)-polysiloxane block copolymer reaction product. The oxidative copolymerization can be initiated in the presence of at least 50 weight percent of the hydroxyaryl-terminated polysiloxane and less than or equal to 50 weight percent of the monohydric phenol. In some embodiments, the oxidative copolymerization is initiated in the presence of at least 80 weight percent of the hydroxyaryl-terminated polysiloxane, specifically at least 90 weight percent of the hydroxyaryl-terminated polysiloxane, more specifically 100 weight percent of the hydroxyaryl-terminated polysiloxane.

The hydroxyaryl-terminated polysiloxane can comprise, on average, about 35 to about 80 siloxane repeating units. In some embodiments, the hydroxyaryl-terminated polysiloxane comprises, on average, about 40 to about 70 siloxane repeating units, specifically about 40 to about 60 siloxane repeating units, more specifically about 40 to about 50 siloxane repeating units. The hydroxyaryl-terminated polysiloxane can constitute about 1 to about 8 weight percent, specifically about 3 to about 8 weight percent, of the combined weight of the monohydric phenol and the hydroxyaryl-terminated polysiloxane.

The oxidative copolymerization can be conducted with a reaction time greater than or equal to 110 minutes. The reaction time is the elapsed time between initiation and termination of oxygen flow. (Although, for brevity, the description herein repeatedly refers to "oxygen" or "oxygen flow", it will be understood that any oxygen-containing gas, including air, can be used as the oxygen source.) In some embodiments, the reaction time is 110 to 300 minutes, specifically 140 to 250 minutes, more specifically 170 to 220 minutes.

The oxidative copolymerization can include a "build time" which is the time between completion of monomer addition and termination of oxygen flow. In some embodiments, the reaction time comprises a build time of 80 to 160 minutes. In some embodiments, the reaction temperature during at least part of the build time can be 40 to 60°C, specifically 45 to 55°C.

After termination of the copolymerization reaction, the product poly(arylene ether)-polysiloxane block copolymer reaction product can be isolated from solution using methods known in the art for isolating poly(arylene ether)s from solution. For example, the poly(arylene ether)-polysiloxane block copolymer reaction product can be isolated by precipitation with an antisolvent, such as a C₁-C₆ alkanol, including methanol, ethanol, n-propanol, and isopropanol. The present inventors have observed that the use of isopropanol is advantageous because it is a good solvent for unreacted hydroxyaryl-terminated polysiloxane. Therefore, precipitation and washing with isopropanol substantially removes hydroxyaryl-terminated polysiloxane from the isolated product. As an alternative to precipitation, the poly(arylene ether)-polysiloxane block copolymer reaction product can be isolated by direct isolation methods, including devolatilizing extrusion. In some embodiments, the composition comprises less than or equal to 1.5 weight percent of the hydroxyaryl-terminated polysiloxane, specifically less than or equal to 0.5 weight percent of the hydroxyaryl-terminated polysiloxane, based on the total weight of the composition. Precipitation of the poly(arylene ether)-polysiloxane block copolymer reaction product in isopropanol has been observed to be effective for separating hydroxyaryl-terminated polysiloxane from the reaction product.

In some embodiments, the poly(arylene ether)-polysiloxane block copolymer reaction product incorporates greater than 75 weight percent, of the hydroxyaryl-terminated polysiloxane starting material into the poly(arylene ether)-polysiloxane block copolymer. Specifically, the amount of hydroxyaryl-terminated polysiloxane incorporated into the poly(arylene ether)-polysiloxane block copolymer can be at least 80 weight percent, more specifically at least 85 weight percent, still more specifically at least 90 weight percent, yet more specifically at least 95 weight percent.

In a very specific procedure for preparing the poly(arylene ether)-polysiloxane block copolymer reaction product, the monohydric phenol is 2,6-dimethylphenol; the hydroxyaryl-terminated polysiloxane is a eugenol-capped polydimethylsiloxane comprising 35 to 60 dimethylsiloxane units; the oxidative copolymerization is initiated in the presence of at least 90 weight percent of the hydroxyaryl-terminated polysiloxane and 2 to 20 weight percent of the monohydric phenol; the oxidative copolymerization is conducted with a reaction time of 170 to 220 minutes; and the hydroxyaryl-terminated polysiloxane constitutes 2 to 7 weight percent of the combined weight of the monohydric phenol and the capped polysiloxane.

Additional details relating to the preparation, characterization, and properties of the poly(arylene ether)-polysiloxane block copolymer reaction product can be found in copending U.S. Patent Application Serial No. 12/277,835, filed November 25, 2008 and published December 24, 2009 as U.S. Patent Application Publication No. US 2009/0318635 A1 of Carrillo et al.

In addition to the oxidative copolymerization method described above, a polyesterification method can be used to form the poly(arylene ether)-polysiloxane block copolymer. When the polyesterification method is used, the product is a multiblock copolymer comprising at least two poly(arylene ether) blocks and at least two polysiloxane blocks. Thus, in some embodiments, the poly(arylene ether)-polysiloxane block copolymer comprises a poly(arylene ether)-polysiloxane multiblock copolymer that is the product of copolymerizing a hydroxy-diterminated poly(arylene ether), a hydroxyaryl-diterminated polysiloxane, and an aromatic diacid chloride.

The hydroxy-diterminated poly(arylene ether) can have the structure 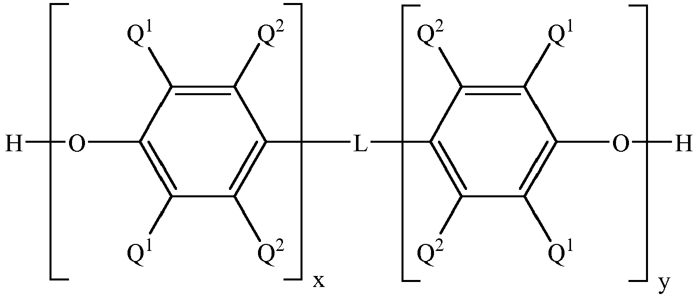 wherein x and y are each independently 0 to about 100, provided that the sum of x and y is at least 2; each occurrence of Q¹ is independent selected from the group consisting of halogen, C₁-C₁₂ hydrocarbylthio, C₁-C₁₂ hydrocarbyloxy, C₂-C₁₂ halohydrocarbyloxy wherein at least two carbon atoms separate the halogen and oxygen atoms, and unsubstituted or substituted C₁-C₁₂ hydrocarbyl provided that the hydrocarbyl group is not tertiary hydrocarbyl; each occurrence of Q² is independently selected from the group consisting of hydrogen, halogen, C₁-C₁₂ hydrocarbylthio, C₁-C₁₂ hydrocarbyloxy, C₂-C₁₂ halohydrocarbyloxy wherein at least two carbon atoms separate the halogen and oxygen atoms, and unsubstituted or substituted C₁-C₁₂ hydrocarbyl provided that the hydrocarbyl group is not tertiary hydrocarbyl; and L has the structure 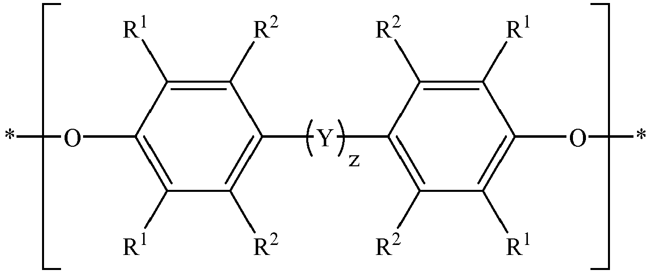 wherein each occurrence of R¹ and R² is independently selected from the group consisting of hydrogen, halogen, C₁-C₁₂ hydrocarbylthio, C₁-C₁₂ hydrocarbyloxy, C₂-C₁₂ halohydrocarbyloxy wherein at least two carbon atoms separate the halogen and oxygen atoms, and unsubstituted or substituted C₁-C₁₂ hydrocarbyl provided that the hydrocarbyl group is not tertiary hydrocarbyl; z is 0 or 1; and Y has a structure selected from the group consisting of 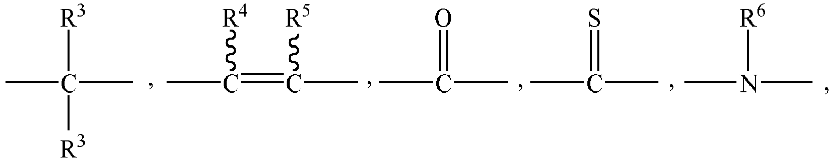 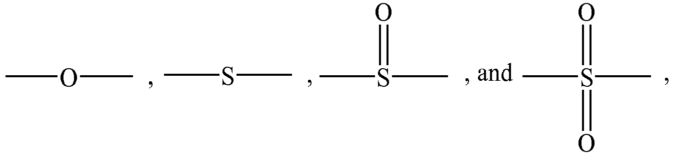 wherein each occurrence of R³-R⁶ is independently hydrogen or C₁-C₁₂ hydrocarbyl.

In some embodiments, the hydroxy-diterminated poly(arylene ether) has the structure 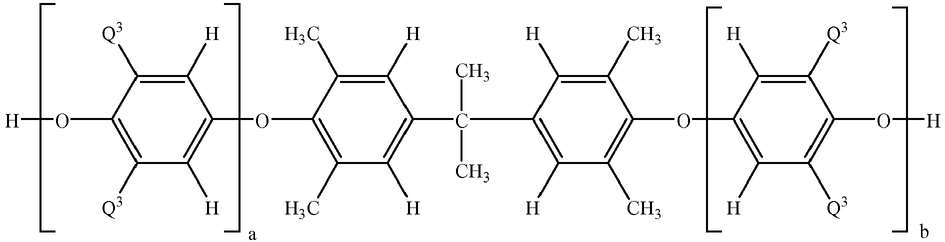 wherein each occurrence of Q³ is independently methyl or di-n-butylaminomethyl; and each occurrence of a and b is independently 0 to about 100, provided that the sum of a and b is, on average, about 3 to about 100. In some embodiments, the sum of a and b is, on average, about 4 to about 30.

The aromatic diacid chloride used in the polyesterification method can be, for example, terephthaloyl chloride, isophthaloyl chloride, 4,4'-biphenyldicarbonyl chloride, 3,3'-biphenyldicarbonyl chloride, 3,4'-biphenyldicarbonyl chloride, 4,4'-oxybis(benzoyl chloride), 3,3'-oxybis(benzoyl chloride), 3,4'-oxybis(benzoyl chloride), 4,4'-sulfonylbis(benzoyl chloride), 3,3'-sulfonylbis(benzoyl chloride), 3,4'-sulfonylbis(benzoyl chloride), naphthalene-2,6-dicarbonyl chloride, or a mixture thereof. In some embodiments, the aromatic diacid chloride comprises terephthaloyl chloride.

As noted above, when the poly(arylene ether)-polysiloxane multiblock copolymer is prepared by the polyesterification method, it comprises at least two poly(arylene ether) blocks and at least two polysiloxane blocks. However, it can contain many more of each type of block. For example, in some embodiments, the poly(arylene ether)-polysiloxane multiblock copolymer comprises about 5 to about 25 poly(arylene ether) blocks and about 10 to about 30 polysiloxane blocks.

Additional details relating to the polyesterification method and the poly(arylene ether)-polysiloxane multiblock copolymer prepared thereby can be found in copending U.S. Patent Application Serial No. 12/644,144 filed on December 22, 2009.

The poly(arylene ether) can be prepared by the oxidative coupling of the corresponding monohydroxyaromatic compound(s) such as 2,6-xylenol and/or 2,3,6-trimethylphenol. Catalyst systems are generally employed for such coupling. They can contain heavy metal compound(s) such as a copper, manganese, or cobalt compounds, usually in combination with various other materials such as a secondary amine, tertiary amine, halide or combination of two or more of the foregoing.

In some embodiments, the poly(arylene ether) has an intrinsic viscosity of about 0.3 to about 1.6 deciliters per gram, as measured by ubbelohde viscometer in chloroform at 25°C. Within this range, the intrinsic viscosity can be at least about 0.4 deciliter per gram, or at least about 0.5 deciliter per gram, or at least about 0.55 deciliter per gram. Also within this range, the intrinsic viscosity can be up to about 1.2 deciliters per gram, or up to about 1.0 deciliter per gram, or up to about 0.8 deciliter per gram, or up to about 0.6 deciliter per gram.

In embodiments in which the polyamide consists of at least one member selected from the group consisting of polyamide-6,6 and polyamide-9T, the poly(arylene ether) amount is 25 to 50 weight percent, based on the total weight of the composition. Within this range, the poly(arylene ether) amount can be about 30 to about 45 weight percent, specifically about 35 to about 45 weight percent.

The poly(arylene ether) amount can be 38 to 50 weight percent, based on the total weight of the composition. Within this range, the poly(arylene ether) amount can be about 39, to about 45 weight percent, specifically about 40 to about 45 weight percent.

In addition to the polyamide and the poly(arylene ether), the composition can, optionally, further comprise a compatibilizing agent to compatibilize the polyamide and poly(arylene ether) phases. As used herein, the term "compatibilizing agent" refers to a polyfunctional compound that interacts with the poly(arylene ether), the polyamide resin, or both. This interaction may be chemical (for example, grafting) and/or physical (for example, affecting the surface characteristics of the dispersed phases). In either instance the resulting compatibilized blend exhibits improved compatibility, particularly as evidenced by enhanced impact strength, mold knit line strength, and/or tensile elongation. As used herein, the expression "compatibilized blend" refers to compositions that have been physically and/or chemically compatibilized with a compatibilizing agent, as well as blends of poly(arylene ether)s and polyamides that are physically compatible without such agents (as, for example, from compatibility-enhancing dibutylaminomethyl substituents on the poly(arylene ether)).

Examples of compatibilizing agents that may be employed include liquid epoxy compounds, quinones, organosilane compounds, polyfunctional compounds, functionalized poly(arylene ether)s, and combinations thereof.

In some embodiments, the compatibilizing agent comprises a polyfunctional compound. Polyfunctional compounds that may be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ₋₅OH, CₙH₂ₙ₋₇OH and CₙH₂ₙ₋₉OH, wherein n is a positive integer less than or equal to 30); unsaturated amines resulting from replacing from replacing the -OH group(s) of the above unsaturated alcohols with -NH₂ group(s); and combinations comprising one or more of the foregoing. In one embodiment, the compatibilizing agent comprises maleic anhydride and/or fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which may be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

(R^{I}O)ₘR'(COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R¹ is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In one embodiment, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. In one embodiment, the compatibilizing agent comprises trimellitic anhydride acid chloride.

The foregoing compatibilizing agents may be added directly to the melt blend or pre-reacted with either or both of the poly(arylene ether) and the polyamide, as well as with any other materials employed in the preparation of the composition. With many of the foregoing compatibilizing agents, particularly the polyfunctional compounds, even greater improvement in compatibility is found when at least a portion of the compatibilizing agent is pre-reacted, either in the melt or in a solution of a suitable solvent, with all or a part of the poly(arylene ether). It is believed that such pre-reacting may cause the compatibilizing agent to react with and consequently functionalize the poly(arylene ether). For example, the poly(arylene ether) may be pre-reacted with maleic anhydride to form an anhydride-functionalized poly(arylene ether) that has improved compatibility with the polyamide compared to a non-functionalized poly(arylene ether).

Where a compatibilizing agent is employed in the preparation of the composition, the amount used will be dependent upon the specific compatibilizing agent chosen and the specific polymeric system to which it is added. In some embodiments, the compatibilizing agent amount is about 0.1 to about 1 weight percent, specifically about 0.2 to about 0.8 weight percent, more specifically about 0.3 to about 0.6 weight percent, based on the total weight of the thermoplastic composition.

In some embodiments, the composition comprises one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments. The type an amount of each additive will vary according to the additive type and the intended use of the composition, but each additive is typically used in an amount of less than or equal to 5 weight percent, specifically less than or equal to 4 weight percent, more specifically less than or equal to 3 weight percent, still more specifically less than or equal to 2 weight percent, yet more specifically less than or equal to 1 weight percent, based on the total weight of the composition. In some embodiments, the total amount of additives is less than or equal to 15 weight percent, specifically less than or equal to 12 weight percent, more specifically less than or equal to 8 weight percent, still more specifically less than or equal to 6 weight percent, even more specifically less than or equal to 4 weight percent, yet more specifically less than or equal to 2 weight percent.

The composition excludes one or more of polystyrenes and impact modifiers. The composition excludes any polymer other than the polyamide and the poly(arylene ether).

In some embodiments, the fiber has a diameter of about 20 to about 200 micrometers. Within this range, the diameter can be 40 to 150 micrometers, specifically about 50 to about 100 micrometers. As the composition is typically suitable for the continuous production of fiber, there is no particular upper limit on the fiber length. However, the fiber length is typically at least 1 centimeter long, specifically at least one meter long.

In some embodiments, the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.

The invention includes methods of making the fiber. Thus, one embodiment is a method of forming a fiber, comprising: melt extruding a composition comprising 50 to 75 weight percent of polyamide consisting of at least one member selected from the group consisting of polyamide-6,6 and polyamide-9T, and 25 to 50 weight percent of a poly(arylene ether); wherein all weight percents are based on the total weight of the composition; and wherein the composition excludes any polymer other than the polyamide and the poly(arylene ether).

The method of forming a fiber may comprise: melt extruding a composition comprising 50 to 62 weight percent of the polyamide, and 38 to 50 weight percent of the poly(arylene ether); wherein all weight percents are based on the total weight of the composition.

The methods can utilize known procedures and apparatuses for preparing fibers from polymer compositions. A specific fiber-forming method is described in the working examples.

The compositional variations described above in the context of the fiber apply as well to the methods of forming the fiber.

In some embodiments, the melt extruding is conducted at a temperature of about 250 to about 290°C. Within this range, the extrusion temperature can be about 260 to about 280°C.

In some embodiments, the melt extruding is conducted at a pressure of about 2 to about 9 megapascals, specifically about 3 to about 8 megapascals, more specifically about 3.5 to about 6 megapascals, even more specifically about 3.5 to about 6 megapascals.

The invention includes at least the following embodiments.
Embodiment 1: A fiber comprising a composition comprising: 50 to 75 weight percent of polyamide consisting of at least one member selected from the group consisting of polyamide-6,6 and polyamide-9T; and 25 to 50 weight percent of a poly(arylene ether); wherein all weight percents are based on the total weight of the composition; and wherein the composition excludes any polymer other than the polyamide and the poly(arylene ether).
Embodiment 2: The fiber of embodiment 1, wherein the polyamide consists of polyamide-6,6.
Embodiment 3: The fiber of embodiment 1 or 2, wherein the poly(arylene ether) comprises a poly(arylene ether)-polysiloxane multiblock copolymer.
Embodiment 4: The fiber of any of embodiments 1-3, wherein the poly(arylene ether) has an intrinsic viscosity of about 0.55 to about 1.6 deciliter per gram, measured at 25°C in chloroform.
Embodiment 5: The fiber of any of embodiments 1-4, having a diameter of about 20 to about 200 micrometers.
Embodiment 6: The fiber of any of embodiments 1-5, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.
Embodiment 7: The fiber of embodiment 1, wherein the composition comprises: 50 to 62 weight percent of the polyamide; and 38 to 50 weight percent of the poly(arylene ether); wherein all weight percents are based on the total weight of the composition.
Embodiment 8: The fiber of embodiment 7, wherein the polyamide consists of polyamide-6,6.
Embodiment 9: The fiber of embodiment 7 or 8, wherein the poly(arylene ether) comprises a poly(arylene ether)-polysiloxane multiblock copolymer.
Embodiment 10: The fiber of any of embodiments 7-9, wherein the poly(arylene ether) has an intrinsic viscosity of about 0.55 to about 1.6 deciliter per gram, measured at 25°C in chloroform.
Embodiment 11: The fiber of any of embodiments 7-10, having a diameter of about 20 to about 200 micrometers.
Embodiment 12: The fiber of any of embodiments 7-11, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.
Embodiment 13: A method of forming a fiber, comprising: melt extruding a composition comprising 50 to 75 weight percent of polyamide consisting of at least one member selected from the group consisting of polyamide-6,6 and polyamide-9T, and 25 to 50 weight percent of a poly(arylene ether); wherein all weight percents are based on the total weight of the composition; and wherein the composition excludes any polymer other than the polyamide and the poly(arylene ether).
Embodiment 14: The method of embodiment 13, wherein the polyamide consists of polyamide-6,6.
Embodiment 15: The method of embodiment 13 or 14, wherein the poly(arylene ether) comprises a poly(arylene ether)-polysiloxane multiblock copolymer.
Embodiment 16: The method of any of embodiments 13-15, wherein the poly(arylene ether) has an intrinsic viscosity of about 0.55 to about 1.6 deciliter per gram, measured at 25°C in chloroform.
Embodiment 17: The method of any of embodiments 13-16, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.
Embodiment 18: The method of any of embodiments 13-17, wherein the melt extruding is conducted at a temperature of about 250 to about 290°C.
Embodiment 19: The method of any of embodiments 13-18, wherein the melt extruding is conducted at a pressure of about 2 to about 9 megapascals.
Embodiment 20: The method of embodiment 13, comprising: melt extruding a composition comprising 50 to 62 weight percent of the polyamide, and 38 to 50 weight percent of the poly(arylene ether); wherein all weight percents are based on the total weight of the composition.
Embodiment 21: The method of embodiment 20, wherein the polyamide consists of polyamide-6,6.
Embodiment 22: The method of embodiment 20 or 21, wherein the poly(arylene ether) comprises a poly(arylene ether)-polysiloxane multiblock copolymer.
Embodiment 23: The method of any of embodiments 20-22, wherein the poly(arylene ether) has an intrinsic viscosity of about 0.55 to about 1.6 deciliter per gram, measured at 25°C in chloroform.
Embodiment 24: The method of any of embodiments 20-23, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.
Embodiment 25: The method of any of embodiments 20-24, wherein the melt extruding is conducted at a temperature of about 250 to about 290°C.
Embodiment 26: The method of any of embodiments 20-25, wherein the melt extruding is conducted at a pressure of about 2 to about 9 megapascals.

The invention is further illustrated by the following non-limiting examples.

### EXAMPLES

These examples describe attempts to prepare fibers from three polyamide compositions containing 0, 20, or 40 weight percent poly(arylene ether). The components used to form the compositions are summarized in Table 1. The compositions themselves are summarized in Table 2, where component amounts are in weight percent based on the total weight of the composition.

Pellets of each composition were prepared by melt blending the respective components in a twin-screw extruder. All components other than polyamide were introduced at the throat of the extruder. Using a feedport located approximately 1/3 downstream the length of the extruder, polyamide was added. The resulting pellets were dried for four hours at 80°C under vacuum.

**Table 1**

| Component Designation | Description |
|---|---|
| PPE | Poly(2,6-dimethyl-1,4-phenylene ether) (CAS Reg. No. 25134-01-4) having an intrinsic viscosity of about 0.57 deciliter per gram, measured in chloroform at 25°C; obtained as PPO 805 from SABIC Innovative Plastics. |
| PA-6,6 | Polyamide-6,6 (CAS Reg. No. 32131-17-2), having a reduced viscosity of about 120 to 130 milliliters per gram and an amino endgroup concentration of about 40 to 60 milliequivalents per gram was obtained from Rhodia. |
| Citric acid | Citric acid (CAS Reg. No. 77-92-9), obtained from Jungbunzlauer. |
| Hindered phenol stabilizer | Octadecyl 3-(3,5-di-tert-butyl-4-hydroxyphenyl)propionate (CAS Reg. No. 2082-79-3), obtained from Ciba as IRGANOX 1076. |
| KI solution | A 50 weight percent solution of potassium iodide (CAS Reg. No. 7681-11-0) in water. |
| CuI | Cuprous iodide (CAS Reg. No. 7681-65-4), obtained from Oerter Chemicals. |

**Table 2**

| Component | C. Ex. 1 | C. Ex. 2 | Ex. 1 |
|---|---|---|---|
| PPE | 0 | 20 | 40 |
| Citric acid | 0 | 0.7 | 0.7 |
| Hindered phenol stabilizer | 0 | 0.3 | 0.3 |
| KI solution | 0 | 0.1 | 0.1 |
| CuI | 0 | 0.01 | 0.01 |
| Polyamide-6,6 | 100 | 78.89 | 58.89 |

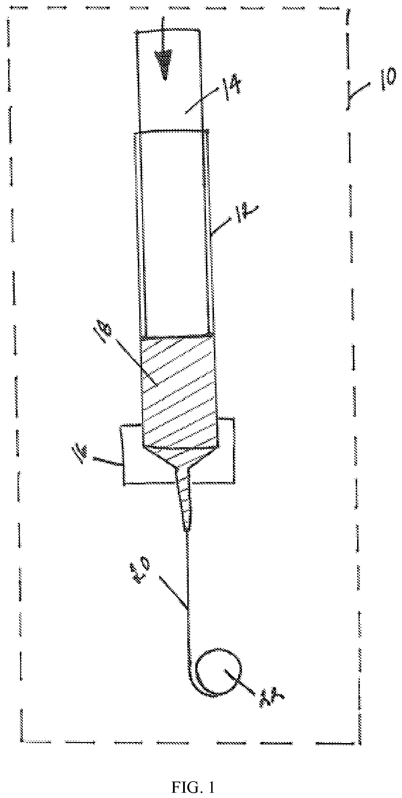

Fiber preparation utilized a piston-type melt-spinning device, a schematic illustration of which is presented in Figure 1. In Figure 1, spinning device 10 comprises a heated cylinder 12, a piston 14 (with the associated arrow showing the direction of movement of the piston 14 during fiber production), and die 16. The heated cylinder 12 holds melted composition 18, which is extruded through die 16 to form fiber 20. The fiber is taken up on winder 22 (with the associated arrow showing the direction of movement of the winder 22 during fiber production). The spinning device used a 0.3 millimeter capillary hole with a length to diameter ratio of 2:1, a 40 micrometer filtering mesh, a sample volume of 8 cubic centimeters, and a spinning path of 1.5 meters, where "spinning path" is the distance from the die to the winder. Other spinning conditions are trial-specific and summarized in Table 3.

To prepare fiber from a given composition, dried pellets were added to the heated cylinder 12, which was maintained at the temperature specified in Table 3. After ten minutes at the specified temperature, the drive piston was activated and the composition was extruded from the die to form a fiber, which was then wound around the winder 22. Results of each trial are summarized in the Remarks column of Table 3.

**Table 3**

| Trial | Compos. | Temp. (°C) | Flow rate (cm³/min) | Pressure (MPa) | Take-up (m/min) | Remarks |
|---|---|---|---|---|---|---|
| 1.1 | C. Ex. 1 | 265 | 0.385 | 70 | -- | Pressure too high. |
| 1.2 | C. Ex. 1 | 270 | 0.385 | 22 | 100 | Fiber was taken with no problem. |
| 1.3 | C. Ex. 1 | 270 | 0.385 | 23-25 | 200 | Fiber was taken with no problem. |
| 1.4 | C. Ex. 1 | 270 | 0.385 | 23-25 | ∼1000 | Test for maximum speed. |
| 2.1 | C. Ex. 2 | 270 | 0.385 | 25-30 | -- | No take-up possible; fiber breaks under own weight. |
| 2.2 | C. Ex. 2 | 270 | 0.385 | 25-30 | -- | Only extrusion (without winding); fiber was caught on a plate. |
| 2.3 | C. Ex. 2 | 270 | 0.775 | 42-45 | -- | No take-up possible. Only extrusion. Fiber was caught on a plate. |
| 3.1 | Ex. 1 | 270 | 0.385 | 45-48 | 100 | Fiber was taken with no problem. |
| 3.2 | Ex. 1 | 270 | 0.385 | 48 | 600-700 | Test for maximum speed. |

The results show, surprising, that while polyamide alone can be spun, addition of 20 weight percent poly(arylene ether) precludes the formation of a continuous fiber, but addition of 40 weight percent poly(arylene ether) allows the formation of continuous fiber. This non-linear dependent of fiber formation on composition was unexpected.

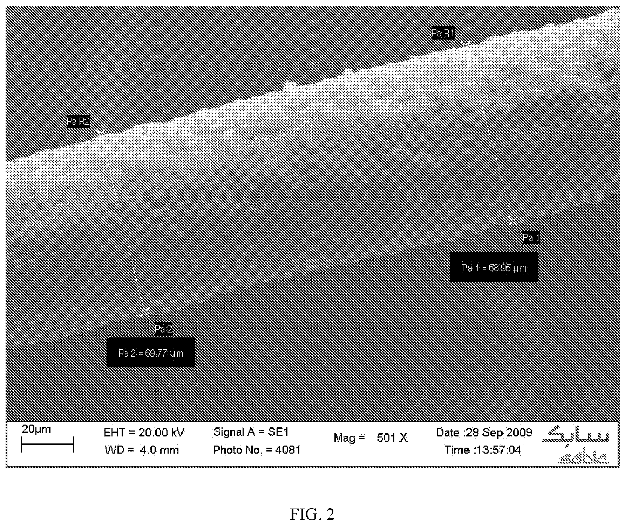

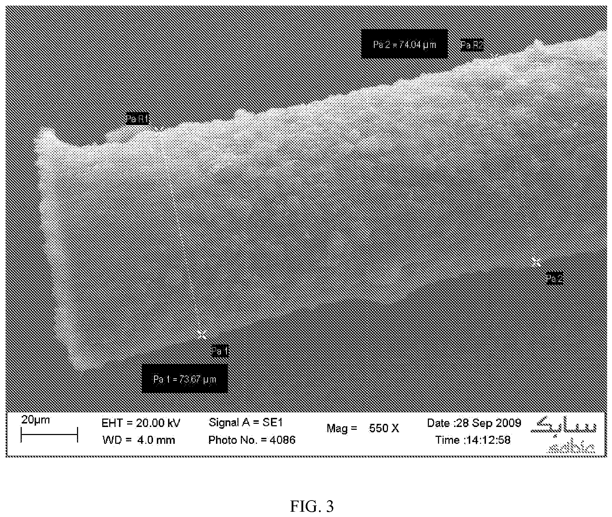

Figures 2 and 3 are scanning electron micrographs of middle and cut end sections, respectively, of a fiber produced in spinning trial 3.1. The surface of the fiber is not smooth. One of advantage of this surface texture is reduced glare and increased permeability of cloth comprising this fiber.

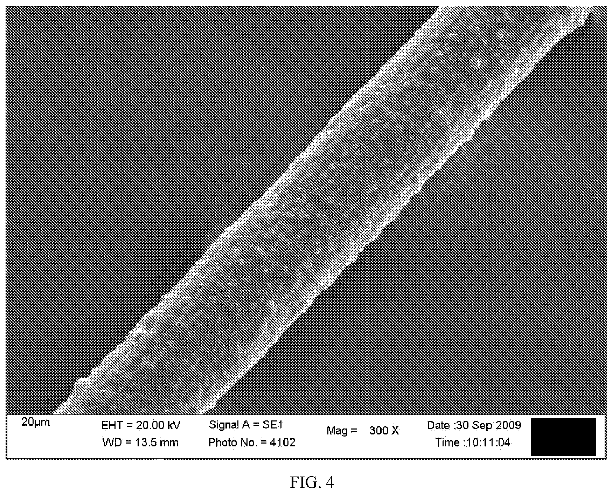

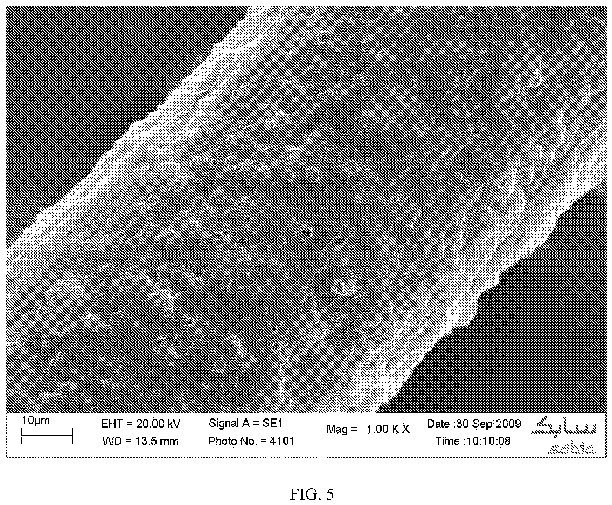

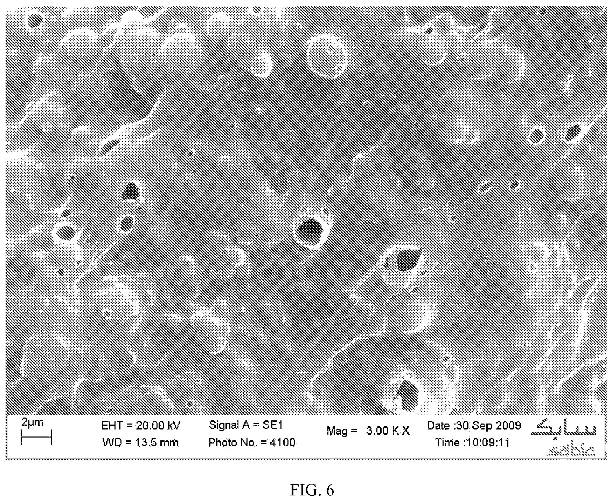

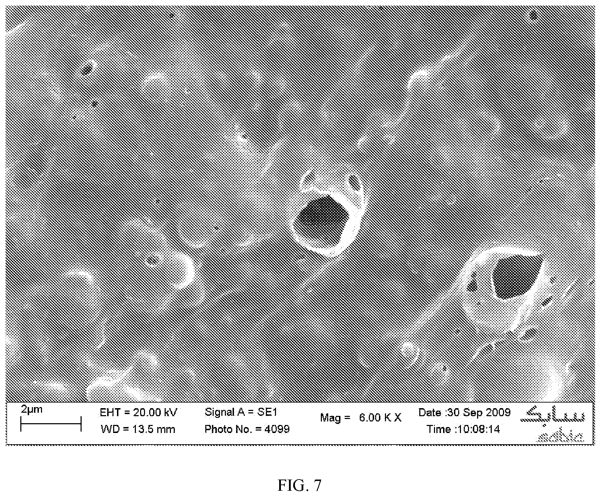

Figures 4-7 are scanning electron micrographs at varying magnifications of a middle section of a fiber prepared according to Example 1, then etched in toluene at 25°C for 15 seconds to selectively dissolve the poly(arylene ether) phase. The images show that major poly(arylene ether) particles (with size around 2 micrometers) are mostly imbedded under the surface of the fiber. This suggests that during melt spinning, polyamide migrates to the surface of the fiber to form a coating layer. As a result most poly(arylene ether) particles survive the etching process.

Thermal properties of the fibers were determined by differential scanning calorimetry (DSC) and thermogravimetric analysis (TGA). Results are presented in Table 4, where "DSC, Tₘ (°C)" is the melting temperature determined by differential scanning calorimetry; "DSC, T_{c} (°C)" is the crystallization temperature determined by differential scanning calorimetry; and "TGA, T_{degrad} (°C)" is the thermal degradation onset temperature determined by thermogravimetric analysis in a nitrogen atmosphere. The thermal degradation temperature results show that the poly(arylene ether)-containing fiber exhibited better thermal stability (i.e., degradation temperature of 442°C in a nitrogen atmosphere) than the poly(arylene ether)-free fiber (i.e., degradation temperature of 427°C in a nitrogen atmosphere). Moisture uptake tests also showed that the poly(arylene ether)-containing fiber absorbs less water than the poly(arylene ether)-free fiber.

**Table 4**

| Property | Trial 3.1 Fiber | Trial 1.2 Fiber |
|---|---|---|
| DSC, Tₘ (°C) | 260 | 260 |
| DSC,T_{c} (°C) | 221 | 227 |
| TGA, T_{degrad} (°C) | 442 | 427 |

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references may serve as reference documents. However, if a term in the present application contradicts or conflicts with a term in the reference, the term from the present application takes precedence over the conflicting term from the reference.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A fiber comprising a composition comprising:
50 to 75 weight percent of polyamide consisting of at least one member selected from the group consisting of polyamide-6,6 and polyamide-9T; and
25 to 50 weight percent of a poly(arylene ether);
wherein all weight percents are based on the total weight of the composition; and wherein the composition excludes any polymer other than the polyamide and the poly(arylene ether).

2. The fiber of claim 1, wherein the poly(arylene ether) comprises a poly(arylene ether)-polysiloxane multiblock copolymer.

3. The fiber of claim 1 or 2, having a diameter of 40 to 150 micrometers.

4. The fiber of any of claims 1-3, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.

5. The fiber of claim 1, wherein the composition comprises a compatibilizing agent selected from citric acid, malic acid, agaricic acid, the anhydrous and hydrated acids thereof, and combinations comprising one or more of the foregoing.

6. A method of forming a fiber, comprising:
melt extruding a composition comprising
50 to 75 weight percent of polyamide consisting of at least one member selected from the group consisting of polyamide-6,6 and polyamide-9T; and
25 to 50 weight percent of a poly(arylene ether);
wherein all weight percents are based on the total weight of the composition; and wherein the composition excludes any polymer other than the polyamide and the poly(arylene ether).

7. The method of claim 6, wherein the poly(arylene ether) comprises a poly(arylene ether)-polysiloxane multiblock copolymer.

8. The method of claim 6 or 7, wherein the composition consists of the polyamide, the poly(arylene ether), and, optionally, less than or equal to 5 weight percent each of one or more additives selected from the group consisting of compatibilizers, stabilizers, antioxidants, polyamide flow promoters, poly(arylene ether) flow promoters, flame retardants, drip retardants, nucleating agents, UV blockers, dyes, and pigments.

9. The method of claim 6, wherein said melt extruding forms a fiber having a diameter of 40 to 150 micrometers.

10. The method of claim 6, wherein the composition comprises a compatibilizing agent selected from citric acid, malic acid, agaricic acid, the anhydrous and hydrated acids thereof, and combinations comprising one or more of the foregoing.

## Patentansprüche

1. Faser, umfassend eine Zusammensetzung umfassend:
50 bis 75 Gewichtsprozent eines Polyamids bestehend aus wenigstens einem Element ausgewählt aus der Gruppe bestehend aus Polyamid-6,6 und Polyamid-9T; und
25 bis 50 Gewichtsprozent eines Poly(arylenether)s;
wobei alle Gewichtsprozentangaben auf das Gesamtgewicht der Zusammensetzung bezogen sind; und wobei die Zusammensetzung jedes andere Polymer als das Polyamid und den Poly(arylenether) ausschließt.

2. Faser nach Anspruch 1, wobei der Poly(arylenether) ein Poly(arylenether)-Polysiloxan-Multiblock-Copolymer umfasst.

3. Faser nach Anspruch 1 oder 2, mit einem Durchmesser von 40 bis 150 Mikrometer.

4. Faser nach irgendeinem der Ansprüche 1 bis 3, wobei die Zusammensetzung aus dem Polyamid, dem Poly(arylenether) und gegebenenfalls weniger als oder gleich 5 Gewichtsprozent jeweils von einem oder mehreren Additiven ausgewählt aus der Gruppe bestehend aus Verträglichkeitsmachern bzw. Kompatibilitätsmitteln, Stabilisatoren, Antioxidationsmitteln, Polyamid-Fließpromotoren, Poly(arylenether)-Fließpromotoren, Flammschutzmitteln, Tropfverzögerern, Nukleierungsmitteln, UV-Blockern, Farbstoffen, und Pigmenten besteht.

5. Faser nach Anspruch 1, wobei die Zusammensetzung einen Verträglichkeitsmacher ausgewählt aus Zitronensäure, Äpfelsäure, Agaricinsäure, den wasserfreien und hydratisierten Säuren davon, und Kombinationen umfassend einen oder mehrere der Vorstehenden umfasst.

6. Verfahren zur Bildung einer Faser, umfassend:
Schmelzextrudieren einer Zusammensetzung umfassend
50 bis 75 Gewichtsprozent eines Polyamids bestehend aus wenigstens einem Element ausgewählt aus der Gruppe bestehend aus Polyamid-6,6 und Polyamid-9T;
25 bis 50 Gewichtsprozent eines Poly(arylenether)s;
wobei alle Gewichtsprozentangaben auf das Gesamtgewicht der Zusammensetzung bezogen sind; und wobei die Zusammensetzung jedes andere Polymer als das Polyamid und den Poly(arylenether) ausschließt.

7. Verfahren nach Anspruch 6, wobei der Poly(arylenether) ein Poly(arylenether)-Polysiloxan-Multiblock-Copolymer umfasst.

8. Verfahren nach Anspruch 6 oder 7, wobei die Zusammensetzung aus dem Polyamid, dem Poly(arylenether) und gegebenenfalls weniger als oder gleich 5 Gewichtsprozent jeweils von einem oder mehreren Additiven ausgewählt aus der Gruppe bestehend aus Verträglichkeitsmachern bzw. Kompatibilitätsmitteln, Stabilisatoren, Antioxidationsmitteln, Polyamid-Fließpromotoren, Poly(arylenether)-Fließpromotoren, Flammschutzmitteln, Tropfverzögerern, Nukleierungsmitteln, UV-Blockern, Farbstoffen, und Pigmenten besteht.

9. Verfahren nach Anspruch 6, wobei das Schmelzextrudieren eine Faser mit einem Durchmesser von 40 bis 150 Mikrometer bildet.

10. Verfahren nach Anspruch 6, wobei die Zusammensetzung einen Verträglichkeitsmacher ausgewählt aus Zitronensäure, Äpfelsäure, Agaricinsäure, den wasserfreien und hydratisierten Säuren davon, und Kombinationen umfassend einen oder mehrere der Vorstehenden umfasst.

## Revendications

1. Fibre comprenant une composition comprenant :
50 à 75 pourcents en poids d'un polyamide constitué par au moins un élément choisi dans le groupe constitué par le polyamide-6,6 et le polyamide-9T ; et
25 à 50 pourcents en poids d'un poly(arylène éther) ; dans laquelle tous les pourcentages en poids sont rapportés au poids total de la composition ; et
dans laquelle la composition ne contient aucun autre polymère que le polyamide et le poly(arylène éther).

2. Fibre selon la revendication 1, dans laquelle le poly(arylène éther) comprend un copolymère multibloc poly(arylène éther)-polysiloxane.

3. Fibre selon la revendication 1 ou 2, qui présente un diamètre de 40 à 150 micromètres.

4. Fibre selon l'une quelconque des revendications 1 à 3, dans laquelle la composition est constituée par le polyamide, le poly(arylène éther), et en option une quantité inférieure ou égale à 5 pourcents en poids de chacun d'un ou plusieurs additifs choisis dans le groupe constitué par les agents de compatibilisation, les stabilisants, les antioxydants, les promoteurs d'écoulement de polyamide, les promoteurs d'écoulement de poly(arylène éther), les retardateurs de flamme, les retardateurs de goutte, les agents de nucléation, les agents bloquant les UV, les colorants et les pigments.

5. Fibre selon la revendication 1, dans laquelle la composition comprend un agent de compatibilisation choisi parmi l'acide citrique, l'acide malique, l'acide agaricique, les acides anhydres et hydratés de ceux-ci, et les combinaisons comprenant un ou plusieurs des composés ci-dessus.

6. Procédé de formation d'une fibre, comprenant :
l'extrusion à l'état fondu d'une composition comprenant 50 à 75 pourcents en poids d'un polyamide constitué par au moins un élément choisi dans le groupe constitué par le polyamide-6,6 et le polyamide-9T ; et
25 à 50 pourcents en poids d'un poly(arylène éther) ;
dans laquelle tous les pourcentages en poids sont rapportés au poids total de la composition ; et
dans laquelle la composition ne contient aucun polymère autre que le polyamide et le poly(arylène éther).

7. Procédé selon la revendication 6, dans lequel le poly(arylène éther) comprend un copolymère multibloc poly(arylène éther)-polysiloxane.

8. Procédé selon la revendication 6 ou 7, dans lequel la composition est constituée par le polyamide, le poly(arylène éther), et en option une quantité inférieure ou égale à 5 pourcents en poids de chacun d'un ou plusieurs additifs choisis dans le groupe constitué par les agents de compatibilisation, les stabilisants, les antioxydants, les promoteurs d'écoulement de polyamide, ales promoteurs d'écoulement de poly(arylène éther), les retardateurs de flamme, les retardateurs de goutte, les agents de nucléation, les agents bloquant les UV, les colorants et les pigments.

9. Procédé selon la revendication 6, dans lequel ladite extrusion à l'état fondu forme une fibre ayant un diamètre de 40 à 150 micromètres.

10. Procédé selon la revendication 6, dans lequel la composition comprend un agent de compatibilisation choisi parmi l'acide citrique, l'acide malique, l'acide agaricique, les acides anhydres et hydratés de ceux-ci, et les combinaisons comprenant un ou plusieurs des composés ci-dessus.
